(19) Europäisches Patentamt / European Patent Office / Office européen des brevets

(11) **EP 3 430 206 B1**

(12) **FASCICULE DE BREVET EUROPEEN**

(45) Date de publication et mention
de la délivrance du brevet:
**02.12.2020 Bulletin 2020/49**

(21) Numéro de dépôt: **17714874.9**

(22) Date de dépôt: **17.03.2017**

(51) Int Cl.:
***E01D 19/14*** *(2006.01)*   ***F16F 15/023*** *(2006.01)*

(86) Numéro de dépôt international:
**PCT/FR2017/050623**

(87) Numéro de publication internationale:
**WO 2017/158307 (21.09.2017 Gazette 2017/38)**

(54) **DISPOSITIF AMÉLIORÉ POUR L'AMORTISSEMENT DE VIBRATIONS D'UN CÂBLE, NOTAMMENT D'UN CÂBLE DE HAUBANAGE**

VERBESSERTE VORRICHTUNG ZUR DÄMPFUNG VON SCHWINGUNGEN BEI EINEM SEIL, INSBESONDERE BEI EINEM SCHRÄGSEIL

IMPROVED DEVICE FOR DAMPING VIBRATIONS IN A CABLE, NOTABLY A CABLE STAY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2016 FR 1652344**

(43) Date de publication de la demande:
**23.01.2019 Bulletin 2019/04**

(73) Titulaire: **SOLETANCHE FREYSSINET**
**92500 Rueil Malmaison (FR)**

(72) Inventeurs:
• **GUESDON, Matthieu**
**92000 Puteaux (FR)**
• **DUGAIN, Antoine**
**77590 Bois-le-Roi (FR)**
• **MILANDOU, Kevin**
**95130 Franconville (FR)**
• **TESTE, Maxime**
**43140 Saint-Didier-en-Velay (FR)**

(74) Mandataire: **Plasseraud IP**
**66, rue de la Chaussée d'Antin**
**75440 Paris Cedex 09 (FR)**

(56) Documents cités:
| | |
|---|---|
| FR-A1- 2 859 260 | FR-A1- 3 012 193 |
| JP-A- H0 658 370 | JP-A- H0 959 921 |
| KR-A- 20040 015 461 | US-A- 3 421 167 |
| US-A1- 2003 093 869 | |

## Description

L'invention se rapporte au domaine technique des dispositifs d'amortissement de vibrations auxquelles sont soumis des câbles, notamment des câbles de haubanage.

De manière connue, les câbles de haubanage, tels que ceux employés pour la suspension des tabliers de pont, sont soumis à des vibrations, qui résultent par exemple du passage de véhicule sur le pont, du vent auquel sont soumis les câbles, etc.

Afin d'amortir ces vibrations, on a couramment recours à des dispositifs d'amortissement couplés à ces câbles, et qui dissipent l'énergie de ces vibrations au moins en partie.

Le document US 3 421 167 A décrit un exemple de dispositifs d'amortissement couplés à un câble de suspension.

FR 2 859 260 A1 décrit un dispositif pour amortir les vibrations d'un câble participant à la structure d'un ouvrage de construction. Le câble comprenant un faisceau de brins métalliques ayant des extrémités ancrées sur l'ouvrage et entouré, dans au moins une zone adjacente à une extrémité ancrée du faisceau, par un tube relié à l'ouvrage. Le dispositif comprend un collier disposé autour du faisceau de brins et des moyens d'absorption d'énergie vibratoire montés entre le collier et le tube. Les moyens d'absorption comprennent des amortisseurs à piston à course linéaire, placés radialement par rapport au câble et répartis angulairement autour du câble, chaque amortisseur à piston ayant une première liaison articulée avec le collier et une seconde liaison articulée avec un support solidaire du tube.

Le document JPH0658370 A décrit un exemple de dipositif d'amortissement couplé à un cable de suspension avec plusieurs vérins d'amortissement ne fonctionnant pas par paire.

Parmi les dispositifs d'amortissement, on distingue plusieurs catégories, dont une catégorie de dispositifs dits externes, qui s'étendent par exemple entre le câble et une structure fixe située à distance de l'ancrage du câble et sont fixés à cette dernière directement, et les dispositifs dit internes, configurés pour amortir les vibrations par coopération conjointe avec le câble et une enveloppe du câble par exemple située à proximité de l'ancrage de celui-ci.

Les dispositifs d'amortissement internes comprennent souvent une pluralité de vérins interposés entre le câble et une portion de l'enveloppe. Ces vérins s'étendent alors radialement relativement au câble. Ils sont alors connectés d'une part à une pièce de réception mise en prise avec le câble, et d'autre part, par une extrémité opposée au câble, à proximité ou au niveau de l'extrémité d'un tube radial ménagé dans l'enveloppe.

Cette configuration présente des inconvénients. En effet, les tubes ainsi formés dans l'enveloppe confèrent à l'enveloppe une forme complexe et disgracieuse, et/ou imposent de disposer d'une enveloppe de diamètre très important. Ceci complexifie la mise en place et la configuration de dispositifs de protection additionnelle que les régulations, les contraintes de conception ou le cahier des charges peuvent imposer aux abords de l'ancrage du câble, tels que des dispositifs anti-feu ou anti-explosion.

L'invention vise à améliorer la situation.

A cet effet, l'invention concerne un dispositif d'amortissement tel que défini dans les revendications annexées.

L'invention concerne en outre un ouvrage d'art, tel que notamment un pont, comprenant un câble et un dispositif d'amortissementi du type ci-dessus.

L'invention sera mieux comprise à la lecture de la description détaillée qui va suivre, donnée uniquement à titre d'exemple et faite en référence aux Figures annexées, sur lesquelles :

- La Figure 1 est une illustration d'un ouvrage d'art selon l'invention ;
- La Figure 2 est une illustration d'une zone d'ancrage d'un câble de l'ouvrage d'art de la Figure 1 au niveau d'un tablier de l'ouvrage d'art ;
- La Figure 3 illustre un dispositif d'amortissement selon l'invention;
- La Figure 4 est une vue du dessus d'une embase du dispositif de la Figure 3 ;
- La Figure 5 est une illustration schématique d'un vérin du dispositif de la Figure 3 ; et
- La Figure 6 est une illustration schématique d'un dispositif d'amortissement selon une variante de l'invention.

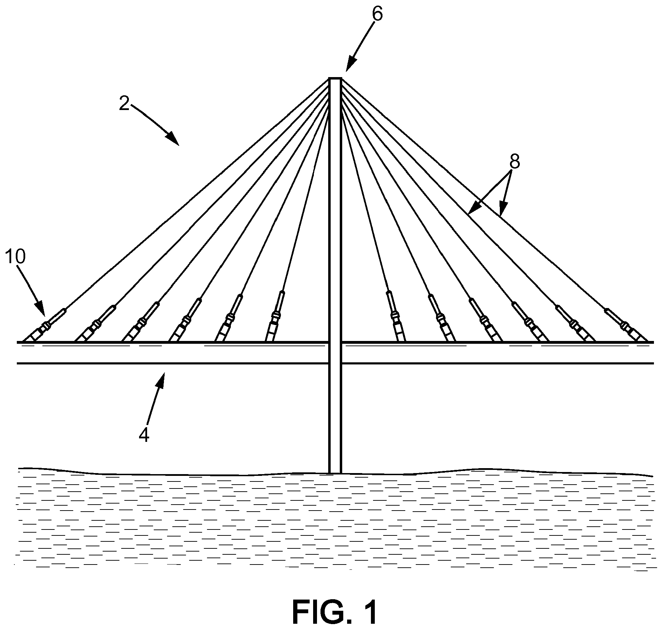

La Figure 1 illustre un ouvrage d'art 2 selon l'invention. Dans l'exemple non limitatif de la Figure 1, l'ouvrage d'art est un pont à haubans.

Toutefois, en variante, l'ouvrage d'art est une tour haubanée ou un pont suspendu.

Le pont comprend un tablier 4, des pylônes 6 ainsi qu'une pluralité de câbles 8. Les câbles 8 s'étendent entre l'un des pylônes 6 et le tablier 4 et forment des haubans assurant la suspension du tablier 4.

Chaque câble 8 comprend par exemple une pluralité de torons au contact les autres des autres. La configuration des torons est par exemple une configuration connue selon laquelle les torons s'étendent au sein d'un faisceau dans lequel les torons s'étendent parallèlement les uns aux autres et au contact les uns des autres.

Dans l'exemple des Figures, le câble 8 a été représenté dénudé. En variante, il est doté d'au moins une gaine de protection sur tout ou partie de sa longueur. Il peut par exemple comprendre une gaine individuelle pour chaque toron, et/ou une gaine collective contenant une pluralité de torons.

Comme décrit plus en détail ci-après, l'ouvrage d'art 2 comprend un dispositif d'amortissement selon l'invention couplé à l'un des câbles 8. Avantageusement, chaque câble est associé à un dispositif d'amortissement selon l'invention.

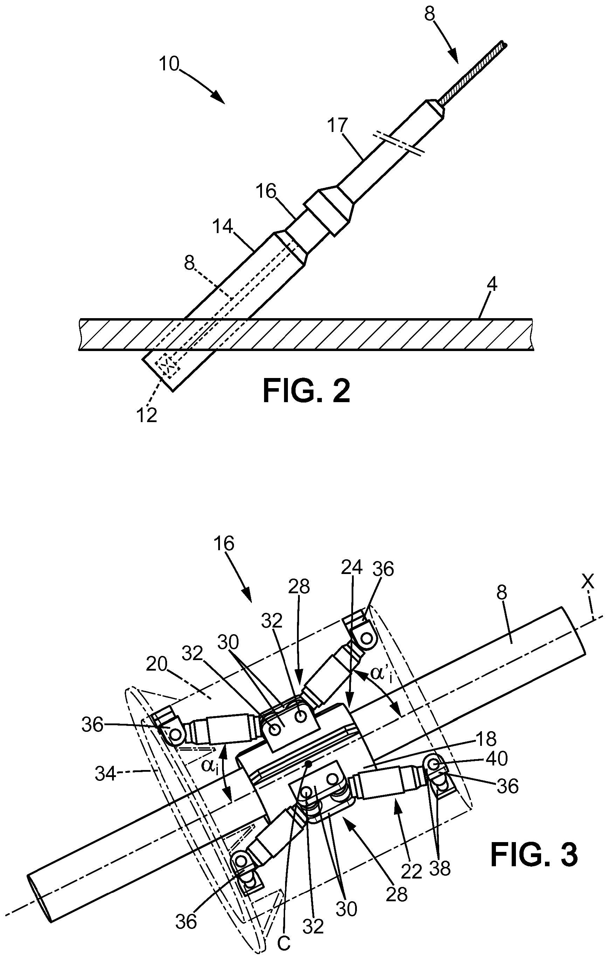

La Figure 2 illustre le détail de la zone d'ancrage 10 d'un câble 8 au niveau du tablier 4.

Cette zone d'ancrage 10 comprend un bloc d'ancrage 12 fixe par rapport au tablier 4 et recevant une extrémité du câble 8. Le bloc d'ancrage 12 est par exemple de facture connue.

La zone d'ancrage 10 comprend également un premier tube 14, un dispositif d'amortissement 16 selon l'invention, et un deuxième tube 17. Optionnellement, la zone d'ancrage 10 comprend en outre un dispositif de protection contre le feu et/ou un dispositif de protection contre les explosions (non représentés).

Le premier tube 14, le dispositif d'amortissement 16 et le deuxième tube 17 sont agencés successivement les uns aux autres. Ils sont par exemple fixés les uns aux autres au moins pour certains.

Le premier tube 14 est configuré pour protéger le câble 8, le bloc d'ancrage 12 et les éventuels éléments servant à l'ancrage du câble 8 dans le bloc d'ancrage 12. En outre, le premier tube 14 est configuré pour guider le câble 8 aux abords du bloc d'ancrage. Dans certaines réalisations dans lequel le bloc d'ancrage 12 n'est pas fixé directement au tablier 4, le premier tube est en outre fixé au bloc d'ancrage et est configuré pour communiquer au tablier les efforts appliqués au bloc d'ancrage. Avantageusement, il est en outre configuré pour empêcher l'accès aux tiers des éléments assurant l'ancrage du câble 8 dans le bloc d'ancrage 12.

Le premier tube 14 est fixé au tablier 4 et reçoit le câble 8 en son sein. Avantageusement, il comprend un passage dans lequel le câble est agencé et dont les parois coopèrent avec le câble pour le bon guidage du câble.

Par exemple, le premier tube 14 est connu sous le nom de tube de coffrage, ou de tube coffrant.

Le deuxième tube 17 est une enveloppe configurée pour empêcher l'accès au câble 8. Le tube 17 est par exemple connu sous le nom de tube anti-vandalisme.

Le tube 17 est par exemple enfilé sur le câble 8 et est en appui sur celui-ci. Il est par exemple connecté au dispositif 16 par l'intermédiaire d'une liaison de type rotule. Cette liaison est par exemple mise en œuvre par l'intermédiaire d'une collerette interposée entre le tube 17 et le dispositif 16.

Le dispositif d'amortissement 16 est couplé au câble 8. Il est configuré pour amortir des vibrations auxquelles est soumis le câble 8. Ces vibrations sont par exemple dues au passage de véhicules sur le tablier, au vent, etc.

Le dispositif d'amortissement 16 est un dispositif d'amortissement de type interne, comme décrit ci-dessus. Autrement dit, il est configuré pour amortir les vibrations du câble par coopération d'amortisseurs que le dispositif 16 comprend avec le câble et une enveloppe du câble. En outre, il est indirectement fixé au tablier 4 comme décrit-ci après.

En référence à la Figure 3, le dispositif d'amortissement 16, ci-après dispositif 16, est couplé mécaniquement au câble 8 et au bloc d'ancrage 12 (et/ou au tablier 4). Plus spécifiquement, il est directement connecté au câble, et indirectement au bloc d'ancrage (et/ou au tablier).

Le dispositif 16 comprend une embase 18, une enveloppe de tubage 20, et une pluralité de vérins 22 d'amortissement formant chacun un amortisseur du dispositif 16. Préférentiellement, le dispositif 16 comprend une pluralité de vérins 22.

Dans le cadre de l'invention, on entend par « vérin d'amortissement » ou plus simplement « vérin » un amortisseur à piston à course sensiblement linéaire. Comme décrit plus en détail ci-après, cet amortisseur à piston à course sensiblement linéaire est configuré pour dissiper au moins une partie de l'énergie qui lui est communiquée, avantageusement par amortissement visqueux.

L'embase 18 est configurée pour coupler mécaniquement le câble 8 aux vérins 22.

A cet effet, l'embase 18 est configurée pour la réception du câble 8 en son sein et sa mise en prise avec le câble. En outre, l'embase 18 est configurée pour être connectée aux vérins 22. Elle est avantageusement également configurée pour le compactage du câble.

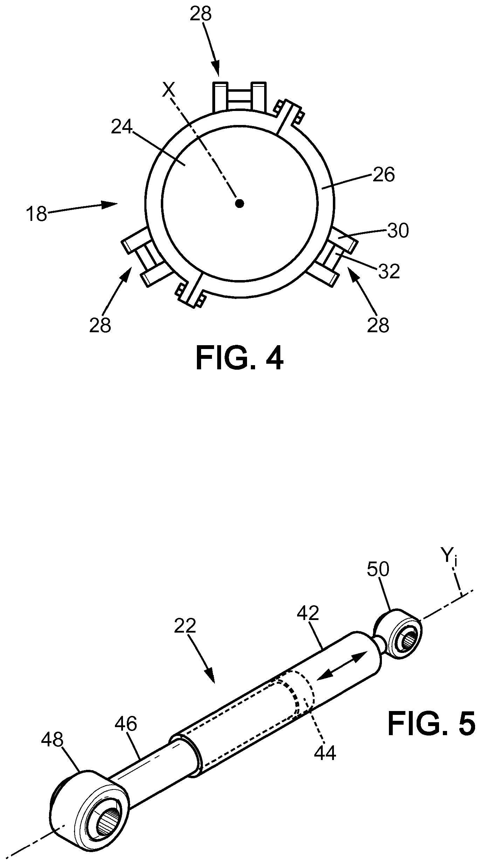

En référence aux Figures 3 et 4, l'embase 18 délimite intérieurement un orifice de passage 24 destiné à recevoir le câble 8. L'orifice de passage 24 s'étend selon un axe longitudinal X. L'orifice de passage 24 est par exemple de forme sensiblement cylindrique s'étendant selon l'axe X. Par exemple, il présente une section de forme complémentaire de la section transversale du câble. Par exemple, cette section est de forme générale circulaire, hexagonale ou encore quelconque. On remarque que dans une configuration au repos telle que celle illustrée sur la Figure 3, le câble 8 s'étend également sensiblement selon l'axe longitudinal X, et ce au moins localement. Toutefois, cet alignement entre le câble 8 et l'axe X est susceptible d'être rompu sous l'effet des vibrations.

L'embase 18 comprend un collier 26 et des dispositifs de fixation 28.

Le collier 26 est configuré pour compacter le câble 8. Autrement dit, le collier 26 est avantageusement un collier de compactage.

Par « compacter », on entend exercer une force radiale centripète. Ceci permet d'assurer le bon couplage mécanique de l'embase et du câble, et ainsi la bonne propagation des vibrations du câble 8 à l'embase 18.

Le collier 26 délimite intérieurement l'orifice de passage 24. Le collier 26 présente une forme générale cylindrique d'axe X.

Le collier 26 comprend avantageusement un mécanisme d'ajustement du diamètre de l'orifice de passage 24. Ceci permet d'assurer une mise en prise optimale des parois de l'orifice de réception 24 avec le câble 8. Ce mécanisme comprend par exemple deux bords circonférentiels du collier disjoints l'un de l'autre, et un dispositif d'ajustement pour la fixation de ces bords l'un à l'autre, définissant optionnellement un interstice circonférentiel entre ces bords qui est de dimension ajustable. Optionnellement, le mécanisme d'ajustement comprend en outre deux bords circonférentiels du collier 26 opposés auxdits bords, et une liaison de type charnière autorisant la rotation des deux demi-colliers circonférentiels ainsi définis autour de la charnière. Alternativement, comme illustré sur la Figure 4, le collier comprend deux portions de collier complémentaires dont les bords circonférentiels définissent des portions de bride destinées à être fixées les unes aux autres de manière ajustable pour la définition du collier et du passage 24 et la bonne mise en prise du collier avec le câble.

Les dispositifs de fixation 28 sont configurés pour la connexion des vérins 22 à l'embase 18. Ils sont fixés au collier 26.

Avantageusement, au moins un dispositif de fixation 28 est adapté pour que le ou les vérins 22 correspondant(s) soit connecté à l'embase 18 par une liaison rotule. Préférentiellement, tous le sont.

Dans le mode de réalisation des Figures 3 et 4, chaque dispositif de fixation 28 est adapté pour réaliser la connexion de deux vérins à l'embase. Alternativement, chaque dispositif de fixation 28 est adapté pour réaliser la connexion d'un seul vérin à l'embase, ou de plus de deux vérins.

Toujours en référence aux Figures 3 et 4, chaque dispositif de fixation 28 comprend par exemple deux montants 30 fixés au collier 26 et, pour chaque vérin qu'il est destiné à connecter à l'embase 18, un axe 32 reçu dans les montants 30.

Les montants 30 se présentent par exemple sous la forme de plaques, qui sont par exemple planes. Les montants 30 d'un dispositif de fixation 28 sont disposés parallèlement l'un à l'autre. Ils s'étendent sensiblement parallèlement à l'axe X. En outre, ils sont espacés l'un de l'autre de façon à autoriser le passage d'une extrémité du ou des vérins associés pour sa fixation au dispositif de fixation 28.

Chaque axe 32 est disposé à coopérer avec une extrémité d'un vérin 22. Chaque axe 32 d'un dispositif de fixation 28 est agencé orthogonalement aux montants 30 correspondant.

Avantageusement, les dispositifs de fixation 28 sont régulièrement espacés, ou distribués, autour de l'axe X.

Dans l'exemple des Figures 3 et 4, l'embase 18 comprend trois dispositifs de fixation 28 chacun configuré pour la fixation de deux vérins 22 à l'embase 18. L'écart angulaire autour de l'axe X entre deux dispositifs de fixation 28 consécutifs est alors sensiblement de 120°, comme illustré en Figure 4.

En outre, avantageusement, les dispositifs de fixation 28 sont fixés au collier 26 au niveau d'une zone centrale du collier 26 d'un point de vue longitudinal. Autrement dit, les dispositifs de fixation 28 sont disposés sensiblement à mi-hauteur le long du collier 26. Toutefois, comme décrit ci-après, d'autres configurations sont envisagées.

L'enveloppe de tubage 20 est configurée pour protéger l'embase 18 et la portion du câble située entre les premier et deuxième tubes 14, 18 de l'environnement extérieur. En outre, l'enveloppe du tubage 20 est configurée pour autoriser l'amortissement des vibrations du câble 8 par les vérins 22.

Comme rendu apparent par la présente description et les figures, l'enveloppe de tubage 20 forme une enveloppe du câble dans la région du dispositif 16 à laquelle les vérins 22 sont connectés.

L'enveloppe de tubage 20 est destinée à être fixe par rapport au bloc d'ancrage 12, ou encore au tablier 4. A cet effet, l'enveloppe de tubage 20 est destinée à être fixée au premier tube 14. Par exemple, l'enveloppe de tubage 20 comprend une couronne de fixation 34 agencée au niveau d'une extrémité longitudinale inférieure qu'elle comprend et qui est destinée à être fixée au premier tube 14.

L'enveloppe de tubage 20 présente une forme générale cylindrique. Avantageusement, elle présente une forme cylindrique de révolution, au moins sur sa face extérieure.

L'enveloppe est creuse. Elle délimite intérieurement un passage central dans lequel l'embase 18, les vérins 22 et le câble 8 sont reçus. Ce passage est par exemple de forme sensiblement cylindrique.

En outre, l'enveloppe 20 est rigide. Elle est par exemple réalisée à partir d'acier.

En configuration d'utilisation du dispositif, l'enveloppe 20 s'étend selon un axe sensiblement confondu avec l'axe X.

Ici, par « sensiblement confondu », on entend qu'en configuration d'utilisation du dispositif d'amortissement dans laquelle les vérins, l'enveloppe et l'embase sont connectés ensemble et l'embase reçoit le câble, ces axes sont confondus, sous réserve des décalages d'alignement pouvant être causés par les mouvements relatifs de l'embase 18 et de l'enveloppe 22 sous l'effet des vibrations du câble 8 et des mouvements des vérins 22 visant à atténuer ces vibrations.

L'enveloppe 20 comprend, pour chaque vérin 22, un élément de fixation 36 configuré pour la connexion du vérin 22 associé à l'enveloppe 20. Cette connexion est réalisée au niveau de l'extrémité du vérin opposée à l'extrémité par laquelle le vérin 22 est connecté à l'embase 18.

Avantageusement, au moins un élément de fixation 36 est configuré pour réaliser la connexion du vérin 22 associé à l'enveloppe 20 par une liaison rotule. Préférentiellement, tous le sont.

En référence à la Figure 3, chaque élément de fixation 36 est fixé à l'enveloppe 20. Avantageusement, chaque élément de fixation 36 est fixé sur une paroi interne de l'enveloppe. Par exemple, ils sont agencés à proximité d'un bord longitudinal de l'enveloppe.

Avantageusement, ces éléments de fixation 36 sont fixés sur l'enveloppe à des emplacements régulièrement espacés autour de l'axe selon lequel s'étend l'enveloppe 20. Par exemple, elle comprend six éléments de fixation 36, dont trois régulièrement espacés autour de cet axe à une première hauteur le long de l'enveloppe, et trois régulièrement autour de cet axe à une deuxième hauteur le long de l'enveloppe. Les éléments de fixation situés à la première hauteur sont avantageusement alignés circonférentiellement avec les éléments de fixation 36 de la deuxième hauteur. Les deux hauteurs correspondent par exemple aux extrémités longitudinales opposées de l'enveloppe 20, ou encore à des emplacements quelconques le long de l'enveloppe.

Chaque élément de fixation 36 comprend par exemple deux montants 38 agencés parallèlement l'un à l'autre, et un axe 40 reçu par les montants.

Du fait du caractère rigide de l'enveloppe, les éléments de fixation ne se déplacent pas les uns par rapport aux autres. Ainsi, les vérins sont liés les uns aux autres de manière rigide via l'enveloppe de tubage.

Les vérins 22 sont configurés pour amortir les vibrations du câble 8 par coopération avec le câble et l'enveloppe de tubage qui est fixe par rapport au tablier.

En référence aux Figures 3 et 5, chaque vérin 22 s'étend sensiblement selon un axe $Y_i$, où i est un entier indexant les vérins.

Chaque vérin est simultanément connecté à l'embase 18 et à l'enveloppe 20 par ses extrémités opposées. Autrement dit, l'une des extrémités des vérins est fixée à l'embase 18, et l'autre extrémité est fixée à l'enveloppe. Avantageusement, comme indiqué précédemment, les connexions des vérins à l'embase et à l'enveloppe 20 sont réalisées par des liaisons rotule.

En référence à la Figure 5, chaque vérin 22 comprend un cylindre 42, un piston 44 déplaçable dans le cylindre 42, et une tige 46 dont une extrémité est fixée au piston 44. L'extrémité opposée de la tige 42 comprend un élément de connexion 48 destiné à coopérer avec un axe 32 d'un dispositif de fixation 28 de l'embase ou avec un axe 40 d'un élément de fixation 36 de l'enveloppe. Le piston 44 comprend en outre, au niveau de son extrémité opposée à la tige 46, un module de connexion 50 destiné à coopérer à un axe 40 d'un élément de fixation 36 de l'enveloppe 20, ou un axe 32 d'un dispositif de fixation 28 de l'embase 18, par opposition à l'élément de connexion 48 portée par la tige 46.

Par exemple, l'élément de connexion 48 et le module de connexion 50 comprennent chacun un embout à rotule destiné à coopérer avec un axe 40 d'un élément de fixation 36 ou un axe 32 d'un dispositif de fixation pour la définition d'une liaison rotule. Avantageusement, ils sont configurés pour que les liaisons définies entre les vérins au sein du système soient ajustées, c'est-à-dire sensiblement dépourvues de jeu.

Les vérins sont avantageusement des vérins hydrauliques.

Dans le contexte de l'invention, au moins un vérin 22 n'est pas dans une disposition orthogonale à l'axe X au sein d'un plan radial relativement à l'axe X. Autrement dit, au moins un vérin 22 est incliné par rapport à l'axe longitudinal X de l'embase 18 d'un angle $\alpha_i$ diffé-rent de 90°. Avantageusement, comme illustré sur la Figure 3, tous le sont.

Autrement dit, l'axe $Y_i$ des vérins 22 correspon-dants est incliné par rapport à l'axe longitudinal X, c'est-à-dire que l'axe X et l'axe $Y_i$ ne sont pas parallèles ou confondus. En outre, l'axe $Y_i$ ne s'étend pas dans un plan orthogonal à l'axe longitudinal X.

Chaque vérin 22 définit, conjointement à l'axe X, un angle $\alpha_i$ aigu. Dans le contexte de l'invention, cet angle est avantageusement inférieur à 80°.

Autrement dit, en considérant que l'angle $\alpha_i$ cor-respond à l'angle aigu parmi les deux angles supplémentaires définis par le vérin considéré et l'axe X, l'angle $\alpha_i$ est inférieur à 80°.

Avantageusement, l'angle $\alpha_i$ est inférieur à 60°. De façon encore plus avantageuse, cet angle est inférieur à 45°. Avantageusement encore, il est inférieur à 30°.

Par exemple, dans une réalisation, cet angle vaut sensiblement 25°. Cette valeur correspond à un compromis performant entre l'encombrement résultant de la présence des vérins, et les performances d'amortissement du dispositif 16.

On remarque que cette configuration inclinée des vérins est la configuration de repos du dispositif dans laquelle le câble n'est pas soumis à des vibrations et les vérins ne sont pas sollicités par le câble.

Avantageusement, au moins une partie des vérins s'étend sensiblement dans un plan radial par rapport à l'axe X (moyennant les déplacements des vérins sous l'effet des vibrations qui peuvent les amener à se désaligner légèrement de ce plan). L'angle $\alpha_i$ est alors défini au sein de ce plan radial. Avantageusement, tous les vérins présentent cette configuration.

Alternativement, au moins une partie des vérins ne s'étend pas dans un plan radial par rapport à l'axe X. Dans une telle configuration, le dispositif 16 comprend par exemple une pluralité de vérins agencés relativement les uns aux autres et relativement à l'embase 18 de façon à équilibrer les efforts de torsion que chaque vérin s'étendant selon un plan non radial à l'axe X tend à appliquer à l'embase.

Par exemple, le dispositif comprend alors un nombre pair de vérins ou de paires de vérins agencées symétriquement par rapport à un plan radial relativement à l'axe X.

Par ailleurs, dans le contexte de l'invention, pour au moins un vérin 22 incliné d'un angle $\alpha_i$ différent de 90° par rapport à l'axe X, le dispositif d'amortissement 16 comprend un vérin 22 complémentaire également incliné d'un angle noté $\alpha'_i$ différent de 90°. Le vérin 22 et son complémentaire sont agencés de part et d'autre d'un plan P orthogonal à l'axe X.

Le plan P passe par un centre C de l'embase 18. Le centre C est situé le long de l'axe X. Il correspond avantageusement à un centre d'épure de l'embase. Le centre C est par exemple situé à mi-hauteur de l'embase le long de cet axe. On remarque qu'en configuration assemblée du dispositif dans laquelle le câble est mis en prise dans l'embase, ce centre C correspond par exemple au centre de la section correspondante du câble 8.

Les connexions respectives à l'embase des deux vérins de la paire ainsi définie sont situées de part et d'autre du plan P. Il en va de même des connexions respectives de ces vérins à l'enveloppe 20.

Avantageusement, tous les vérins du dispositif sont agencés par paires comprenant chacun un vérin et son vérin complémentaire respectivement inclinés d'un angle différent de 90° relativement à l'axe X, ces deux vérins étant agencés de part et d'autre du plan P.

Avantageusement, les vérins sont régulièrement espacés autour de l'axe X. Plus spécifiquement, comme décrit en rapport avec les dispositifs de fixation 28, ils sont avantageusement connectés à l'embase au niveau d'emplacements régulièrement espacés autour de l'axe X.

Lorsque les vérins sont arrangés en paires, ces paires sont connectées à l'embase à des emplacements régulièrement espacés autour de l'axe X. Par exemple, pour un dispositif comprenant trois paires de vérins, ces paires sont espacées de 120° autour de l'axe X.

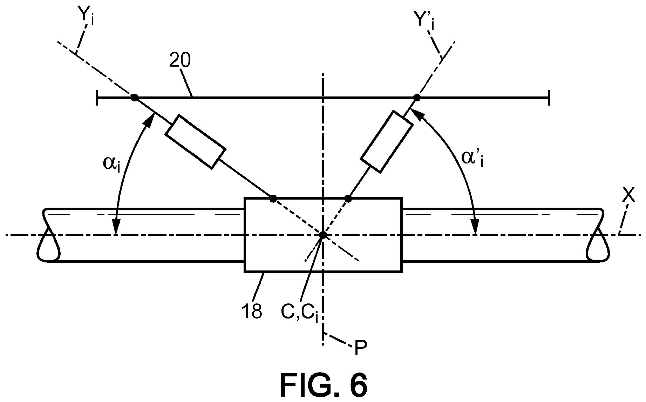

En outre, en notant $Y_i$ et $Y'_i$ (Figure 6) les directions respectives d'un vérin et de son complémentaire, les axes $Y_i$ et $Y'i$ des vérins d'une paire s'étendant dans un plan radial s'intersectent en un point $C_i$.

Avantageusement, pour tout ou partie des paires de vérins, ce point $C_i$ est situé sensiblement dans le plan P.

Avantageusement encore, pour au moins une partie des paires de vérins, ce point $C_i$ correspond sensiblement au point C, comme illustré en Figure 6.

Dans une première configuration illustrée en Figure 3, avantageusement, les vérins de tout ou partie des paires sont agencés sensiblement symétriquement par rapport au plan P.

Ici, par « sensiblement symétriquement », on entend que les vérins sont symétriques par rapport au plan P, moyennant la prise en compte des déplacements relatifs des vérins relativement à l'embase 18, qui ne se traduisent pas nécessairement par un déplacement symétrique des vérins d'une paire donnée par rapport au plan P.

Dans cette configuration, les axes $Y_i$, $Y'_i$ respectifs des deux vérins d'une paire sont sensiblement symétriques par rapport au plan P. Les angles $\alpha_i$ et $\alpha'_i$ de l'un et l'autre des vérins d'une paire sont sensiblement égaux. En outre, pour chaque dispositif de fixation 28 de l'embase 8, les deux axes 32 qu'il comprend sont agencés symétriquement l'un par rapport à l'autre vis-à-vis du plan P. De même, en configuration assemblée du dispositif d'amortissement, les éléments de fixation 36 de l'enveloppe 20 sont disposés de manière sensiblement symétrique par rapport au plan P (à ceci près que l'enveloppe 20 est sujette à des déplacements relativement à l'embase 18, comme indiqué ci-dessus).

Avantageusement, les vérins d'une paire ainsi symétrique présentent alors des coefficients de viscosité sensiblement identiques. Le coefficient de viscosité est issu d'une modélisation du comportement des vérins. Cette modélisation est par exemple représentée par la relation F=c*v, où F est la force développée par le vérin, v est la vitesse du déplacement du piston du vérin et c est le coefficient de viscosité. On remarque que d'autres modélisations peuvent être utilisées, par exemple des modélisations dans lesquelles le terme v présente un exposant différent de un.

Dans l'exemple de la Figure 3, le dispositif d'amortissement 16 comprend trois paires de vérins au sein de chacune desquelles les deux vérins sont agencés sensiblement symétriquement par rapport au plan P.

Dans une deuxième configuration illustrée en Figure 6, les vérins d'au moins une paire de vérins ne sont pas disposés symétriquement par rapport au plan P.

Dans cette deuxième configuration, les angles respectifs $\alpha_i$ et $\alpha'_i$ sont différents l'un de l'autre. En outre, les connexions respectives des deux vérins à l'embase et à l'enveloppe ne sont pas symétriques par rapport au plan P.

Le dispositif comprend alors par exemple des dispositifs de fixation 28 pour l'un et l'autre des vérins. Chacun de ces dispositifs de fixation 28 comprend un seul axe 32. En outre, ces dispositifs 28 sont situés à des emplacements décalés le long de l'embase, et sont situés de part et d'autre du plan P.

Les éléments de fixation 36 respectifs des deux vérins à l'enveloppe 20 sont situés de part et d'autre du plan P à des emplacements non symétriques par rapport à ce plan P.

Avantageusement, dans cette configuration, les vérins d'une paire sont configurés pour présenter des forces développées le long de l'axe X qui s'équilibrent sensiblement l'une l'autre. Autrement dit, ces forces développées présentent sensiblement la même direction mais sont sensiblement opposées.

Par exemple, pour ce faire, les coefficients de viscosité des deux vérins sont définis l'un en fonction de l'autre. Avantageusement, en notant c le coefficient de viscosité du vérin associé à l'angle $\alpha_i$ et c' le coefficient de viscosité du vérin associé à l'angle $\alpha'_i$ (c et c' étant par exemple issus de la modélisation du comportement des vérins décrite ci-dessus), la relation suivante est observée :

$$c' = \frac{sin(2.\alpha_i)}{sin(2.\alpha'_i)} c$$

Préférentiellement, dans la deuxième configuration, pour au moins une partie des paires de vérins situés dans un plan radial par rapport à l'axe X, le point de concours $C_i$ des directions de ces vérins est situé dans le plan P, voire correspond sensiblement au centre C.

On remarque que dans les première et deuxième configurations, les vérins sont ou non agencés dans un plan radial par rapport à l'axe X. Avantageusement toutefois, ils le sont, ce qui permet de s'affranchir des considérations de torsion décrites ci-dessus. En outre, le dispositif peut comprendre une paire de vérins qui n'est pas agencée dans un plan radial par rapport à l'axe X, et une paire de vérins qui est agencée dans un plan radial par rapport à l'axe X.

On note en outre que les directions $Y_i$, $Y'_i$ respectives des vérins d'une paire ne s'étendant pas dans un plan radial à l'axe X ont avantageusement un point de concours Ci également situé sensiblement dans le plan P.

En outre, dans certaines réalisations, les première et deuxième configurations sont combinées. Par exemple, le dispositif comprend une paire de vérins disposés symétriquement par rapport au plan P, et une paire de vérins non symétriques par rapport au plan P.

Pour la mise en place du dispositif d'amortissement 16 sur le câble 8, l'enveloppe 20 est fixée au tube 14 avant enfilage et ancrage du câble 8 dans le bloc d'ancrage 12.

Le câble 8 est alors enfilé (notamment dans les tubes 14 et 17) et ancré dans le bloc d'ancrage 12.

Suite à cela, l'embase est mise en prise sur le câble 8 dans la position désirée, suite à quoi les vérins 22 sont connectés à l'embase 18. Après cela, l'enveloppe est libérée du tube 14 et rapportée aux vérins. Pour la fixation des vérins à l'embase et à l'enveloppe, l'élément dc connexion 48 et le module de connexion 50 de chaque vérin 22 sont couplés pour l'un à un axe 32 d'un dispositif de fixation 28 de l'embase 18, et pour l'autre à un axe 40 d'un élément de fixation 36 de l'enveloppe 20. L'orientation des vérins 22 est choisie parmi les deux orientations possibles. Avantageusement, les vérins sont fixés à l'embase 18 et à l'enveloppe de sorte que l'extrémité libre des tiges 46 corresponde à un point haut du vérin.

Ensuite, l'enveloppe 20 est fixée au tube 14 via la couronne 34, puis le deuxième tube 17 est rapporté à l'enveloppe 20.

Dans un procédé d'installation alternatif, les éléments du dispositif 16 sont par exemple fixés les uns aux autres préalablement à l'enfilage et l'ancrage du câble. Le câble est ensuite enfilé dans l'embase 18 puis ancré, suite à quoi l'embase est mise en prise avec le câble à l'emplacement souhaité le long du câble. L'enveloppe 20 est ensuite fixée au tube 14.

Lors du fonctionnement du dispositif d'amortissement 16, le câble 8 est soumis à des vibrations, qui se traduisent par des mouvements du câble 8. Du fait de la mise en prise du câble 8 avec l'embase 18, ces mouvements sont communiqués à l'embase 18 et aux vérins 22, qui sont connectés à l'embase 18. Du fait de leur fixation à l'enveloppe 20, qui est elle-même fixe par rapport au tablier 4, les mouvements que les vérins 22 reprennent se traduisent par un déplacement de leur piston 44 dans le cylindre 42, et ainsi par la dissipation de l'énergie de ces vibrations par les vérins 22.

Du fait des liaisons rotules connectant les vérins à l'embase et à l'enveloppe, les vérins accommodent les déplacements et les rotations tendant à les faire travailler autrement qu'en traction et en compression.

Le dispositif d'amortissement selon l'invention présente plusieurs avantages.

En effet, la configuration des vérins dans une disposition non radiale, c'est-à-dire autrement qu'orthogonalement à l'axe longitudinal X dans un plan radial, a pour effet d'augmenter la compacité du système. En effet, le diamètre de l'enveloppe de tube peut être réduit. En outre, la configuration de l'enveloppe simplifie le design et l'installation des éventuelles protections complémentaires que la zone d'ancrage 10 est susceptible de comprendre.

En outre, ces résultats sont obtenus sans diminution des performances d'amortissement et de stabilité, en particulier du fait de la configuration des vérins par paires dont les vérins sont disposés de part et d'autre du plan P.

En outre, l'agencement des vérins en paires, au sein desquelles les vérins sont rigidement liés l'un à l'autre du fait de leur connexion à l'enveloppe rigide 20, a pour effet que l'augmentation des effets parasitant les performances d'amortissement des vérins du fait de leur inclinaison par rapport à l'axe X est compensée. En effet, l'inclinaison des vérins se traduit par des efforts longitudinaux appliqués à l'embase qui tendent à augmenter ces effets parasites, qui résultent notamment des jeux et des souplesses des différents éléments du dispositif d'amortissement. La configuration des vérins relativement au plan P (éventuellement conjointement au choix du comportement en amortissement d'un vérin relativement à l'autre vérin de la paire) permet d'équilibrer ce phénomène, et contribue donc aux bonnes performances d'amortissement du dispositif. Cet effet est en outre renforcé par le caractère ajusté, c'est-à-dire sans jeu, des connexions des vérins à l'enveloppe et à l'embase.

La description ci-dessus a été donnée de manière non limitative dans le cadre de l'application de l'invention à un pont.

De façon générale, quel que soit l'ouvrage d'art 2 envisagé, celui-ci comprend un bloc d'ancrage 12 dans lequel une extrémité du câble 8 est reçue. L'enveloppe 20 est alors fixe par rapport au bloc d'ancrage 12, auquel elle est rapportée à l'aide d'un élément intermédiaire tel que le premier tube.

**Revendications**

1. Dispositif d'amortissement pour amortir des vibrations d'un câble (8), le dispositif d'amortissement (16) comprenant :

- une pluralité de vérins (22) d'amortissement;
- une enveloppe de tubage (20) formant une enveloppe du câble (8) dans une région du dispositif d'amortissement (16) et fixe par rapport à un bloc d'ancrage (12), l'enveloppe de tubage (20) délimitant intérieurement un passage central dans lequel une embase (18) et les vérins d'amortissement sont reçus ; et
- l' embase (18) configurée pour coupler mécaniquement le câble aux vérins d'amortissement, l'embase (18) comprenant un orifice de passage (24) pour la réception du câble (8), l'orifice de passage s'étendant selon au moins un axe longitudinal (X),

l'enveloppe de tubage (20) délimitant intérieurement un passage central dans lequel l'embase (18) et les vérins d'amortissement sont reçus, chacun des vérins d'amortissement étant connecté à l'enveloppe de tubage (20) par une extrémité dudit vérin d'amortissement opposée à l'embase (18), caractérisé en ce que la pluralité de vérins (22) d'amortissement comprennent :

- au moins un premier vérin (22) connecté à l'embase (18) et incliné par rapport à l'axe longitudinal (X) d'un angle ($\alpha_i$) différent de 90°, et
- un vérin complémentaire connecté à l'embase et incliné par rapport à l'axe longitudinal (X) d'un angle ($\alpha'_i$) différent de 90°, le premier vérin et le vérin complémentaire étant agencés de part et d'autre d'un plan (P) orthogonal à l'axe longitudinal (X), le plan orthogonal contenant un centre (C) de l'embase (18) situé le long de l'axe longitudinal (X).

2. Dispositif d'amortissement selon la revendication 1, comprenant une pluralité de premiers vérins connectés à l'embase (18) et inclinés par rapport à l'axe longitudinal (X) d'un angle ($\alpha_i$) différent de 90°, le dispositif d'amortissement comprenant, pour chaque premier vérin (22), un vérin complémentaire respectif connecté à l'embase et incliné par rapport à l'axe longitudinal (X) d'un angle ($\alpha'_i$) différent de 90°, le premier vérin et le vérin complémentaire étant agencés de part et d'autre dudit plan orthogonal à l'axe longitudinal (X) et contenant le centre (C) de l'embase (18).

3. Dispositif d'amortissement selon la revendication 1 ou 2, dans lequel le premier vérin et le vérin complémentaire ne sont pas agencés symétriquement l'un par rapport à l'autre relativement audit plan (P).

4. Dispositif d'amortissement selon la revendication 3, dans lequel le premier vérin et le vérin complémentaire sont configurés pour développer des forces respectives le long de l'axe longitudinal (X) qui s'équilibrent sensiblement l'une l'autre.

5. Dispositif d'amortissement selon la revendication 1 ou 2, dans lequel le premier vérin et le vérin complémentaire sont agencés sensiblement symétriquement l'un par rapport à l'autre relativement audit plan (P).

6. Dispositif d'amortissement selon l'une quelconque des revendications précédentes, dans lequel l'angle ($\alpha_i$) de chaque vérin par rapport à l'axe longitudinal est un angle aigu défini conjointement par le vérin (22) correspondant et l'axe longitudinal (X), ledit angle ($\alpha_i$) étant inférieur à 80°.

7. Dispositif d'amortissement selon la revendication 6, dans lequel ledit angle ($\alpha_i$) est inférieur à 45°, et de préférence à 30°.

8. Dispositif d'amortissement selon l'une quelconque des revendications précédentes, dans lequel l'enveloppe de tubage (20) est rigide.

9. Dispositif d'amortissement selon l'une quelconque des revendications précédentes, dans lequel l'enveloppe dc tubage (20) présente une forme générale cylindrique.

10. Dispositif d'amortissement selon l'une quelconque des revendications précédentes, dans lequel au moins un vérin est connecté à l'enveloppe de tubage (20) par une liaison rotule.

11. Dispositif d'amortissement selon l'une quelconque des revendications précédentes, dans lequel au moins un vérin est connecté à l'embase (18) par une liaison rotule.

12. Dispositif d'amortissement selon l'une quelconque des revendications précédentes, dans lequel, le premier vérin et le vérin complémentaire s'étendent sensiblement dans un plan radial par rapport à l'axe longitudinal (X).

13. Dispositif d'amortissement selon la revendication 2, comprenant une pluralité de paires de vérins (22) comportant chacune un premier vérin et le vérin complémentaire associé, les paires de vérins étant connectées à l'embase (22) à des emplacements régulièrement espacés autour de l'axe longitudinal (X).

14. Dispositif d'amortissement selon l'une quelconque des revendications précédentes, dans lequel l'embase (18) comprend un collier (26) destiné à recevoir et compacter le câble (8), le collier (26) délimitant intérieurement ledit orifice de passage (24).

**15.** Ouvrage d'art, comprenant un câble (8) et un dispositif d'amortissement (16) selon l'une quelconque des revendications précédentes, le câble étant reçu dans l'orifice de passage (24) de l'embase (18) du dispositif d'amortissement (16).

**16.** Ouvrage d'art selon la revendication 15, dans lequel l'ouvrage d'art (2) est un pont.

**Patentansprüche**

**1.** Dämpfungsvorrichtung zum Dämpfen von Schwingungen eines Kabels (8), wobei die Dämpfungsvorrichtung (16) umfasst:

- mehrere Dämpfungszylinder (22),
- eine Verrohrungshülle (20), die eine Hülle für das Kabel (8) in einer Region der Dämpfungsvorrichtung (16) bildet und in Bezug auf einen Verankerungsblock (12) festgelegt ist, wobei die Verrohrungshülle (20) im Inneren einen zentralen Durchgang begrenzt, in welchem eine Basis (18) und die Dämpfungszylinder aufgenommen sind, und
- die Basis (18), welche dazu konfiguriert ist, das Kabel mechanisch mit den Dämpfungszylindern zu koppeln, wobei die Basis (18) eine Durchgangsöffnung (24) zur Aufnahme des Kabels (8) umfasst, wobei sich die Durchgangsöffnung entlang mindestens einer Längsachse (X) erstreckt,

wobei die Verrohrungshülle (20) im Inneren einen zentralen Durchgang begrenzt, in welchem die Basis (18) und die Dämpfungszylinder aufgenommen sind, wobei jeder der Dämpfungszylinder mit der Verrohrungshülle (20) an einem Ende des Dämpfungszylinders verbunden ist, das der Basis (18) gegenüberliegt,
**dadurch gekennzeichnet, dass** die mehreren Dämpfungszylinder (22) umfassen:

- mindestens einen ersten Zylinder (22), der mit der Basis (18) verbunden und relativ zu der Längsachse (X) um einen Winkel $(\alpha_i)$ geneigt ist, der sich von 90° unterscheidet,
- einen komplementären Zylinder, der mit der Basis (18) verbunden und relativ zu der Längsachse (X) um einen Winkel $(\alpha'_i)$ geneigt ist, der sich von 90° unterscheidet, wobei der erste Zylinder und der komplementäre Zylinder zu beiden Seiten einer zu der Längsächse (X) orthogonalen Ebene (P) angeordnet sind, wobei die orthogonale Ebene ein Zentrum (C) der Basis (18) enthält, das entlang der Längsachse (X) angeordnet ist.

**2.** Dämpfungsvorrichtung nach Anspruch 1, umfassend mehrere erste Zylinder, die mit der Basis (18) verbunden und relativ zu der Längsachse (X) um einen Winkel $(\alpha_i)$ geneigt sind, der sich von 90° unterscheidet, wobei die Dämpfungsvorrichtung für jeden ersten Zylinder (22) einen jeweiligen komplementären Zylinder umfasst, der mit der Basis verbunden und in Bezug auf die Längsachse (X) um einen Winkel $(\alpha'_i)$ geneigt ist, der sich von 90° unterscheidet, wobei der erste Zylinder und der komplementäre Zylinder auf beiden Seiten der Ebene angeordnet sind, die orthogonal zur Längsachse (X) verläuft und das Zentrum (C) der Basis (18) enthält.

**3.** Dämpfungsvorrichtung nach Anspruch 1 oder 2, wobei der erste Zylinder und der komplementäre Zylinder nicht symmetrisch zueinander bezüglich der Ebene (P) angeordnet sind.

**4.** Dämpfungsvorrichtung nach Anspruch 3, wobei der erste Zylinder und der komplementäre Zylinder konfiguriert sind, um jeweilige Kräfte entlang der Längsachse (X) zu entwickeln, die sich im Wesentlichen gegenseitig ausgleichen.

**5.** Dämpfungsvorrichtung nach Anspruch 1 oder 2, wobei der erste Zylinder und der komplementäre Zylinder im Wesentlichen symmetrisch zueinander bezüglich der Ebene (P) angeordnet sind.

**6.** Dämpfungsvorrichtung nach einem der vorhergehenden Ansprüche, wobei der Winkel $(\alpha_i)$ jedes Zylinders relativ zur Längsachse ein spitzer Winkel ist, der gemeinsam durch den entsprechenden Zylinder (22) und die Längsachse (X) definiert ist, wobei der Winkel $(\alpha_i)$ weniger als 80° beträgt.

**7.** Dämpfungsvorrichtung nach Anspruch 6, wobei der Winkel $(\alpha_i)$ weniger als 45° und vorzugsweise weniger als 30° beträgt.

**8.** Dämpfungsvorrichtung nach einem der vorhergehenden Ansprüche, wobei die Verrohrungshülle (20) starr ist.

**9.** Dämpfungsvorrichtung nach einem der vorhergehenden Ansprüche, wobei die Verrohrungshülle (20) eine allgemein zylindrische Form aufweist.

**10.** Dämpfungsvorrichtung nach einem der vorhergehenden Ansprüche, wobei der wenigstens eine Zylinder mit der Verrohrungshülle (20) durch ein Kugelgelenk verbunden ist.

**11.** Dämpfungsvorrichtung nach einem der vorhergehenden Ansprüche, wobei der wenigstens eine Zylinder mit der Basis (18) durch ein Kugelgelenk verbunden ist.

**12.** Dämpfungsvorrichtung nach einem der vorhergehenden Ansprüche, wobei sich der erste Zylinder und der komplementäre Zylinder im Wesentlichen in einer radialen Ebene in Bezug auf die Längsachse (X) erstrecken.

**13.** Dämpfungsvorrichtung nach Anspruch 2, umfassend mehrere Paare von Zylindern (22), die jeweils einen ersten Zylinder und den zugehörigen komplementären Zylinder umfassen, wobei die Paare von Zylindern an Stellen mit gleichmäßigem Abstand voneinander um die Längsachse (X) herum mit der Basis (22) verbunden sind.

**14.** Dämpfungsvorrichtung nach einem der vorhergehenden Ansprüche, wobei die Basis (18) einen Kragen (26) umfasst, der dazu bestimmt ist, das Kabel (8) aufzunehmen und zu verdichten, wobei der Kragen (26) im Inneren die Durchgangsöffnung (24) begrenzt.

**15.** Bauwerk, umfassend ein Kabel (8) und eine Dämpfungsvorrichtung (16) gemäß einem der vorhergehenden Ansprüche, wobei das Kabel in der Durchgangsöffnung (24) der Basis (18) der Dämpfungsvorrichtung (16) aufgenommen ist.

**16.** Bauwerk nach Anspruch 15, wobei das Bauwerk (2) eine Brücke ist.


**Claims**

**1.** Damping device for damping vibrations of a cable (8), the damping device (16) comprising:

     - a plurality of damping cylinders (22);
     - a tube case (20) forming a case of the cable (8) in a region of the damping device (16) and fixed with respect to an anchor block (12), the tube case (20) internally delimiting a central passage wherein a base (18) and the damping cylinders are received; and
     - the base (18) configured to mechanically couple the cable to the damping cylinders, the base (18) comprising a through-orifice (24) for receiving the cable (8), the through-orifice extending along at least one longitudinal axis (X),

the tube case (20) internally delimiting a central passage wherein the base (18) and the damping cylinders are received,
each of the damping cylinders being connected to the tube case (20) by one end of said damping cylinder opposite the base (18),
**characterised in that** the plurality of damping cylinders (22) comprise:

     - at least a first cylinder (22) connected to the base (18) and inclined with respect to the longitudinal axis (X) at an angle ($\alpha_i$) other than 90°, and
     - a complementary cylinder connected to the base and inclined with respect to the longitudinal axis (X) at an angle ($\alpha'_i$) other than 90°, the first cylinder and the complementary cylinder being arranged on either side of a plane (P) orthogonal to the longitudinal axis (X), the orthogonal plane containing a centre (C) of the base (18) located along the longitudinal axis (X).

**2.** Damping device according to claim 1, comprising a plurality of first cylinders connected to the base (18) and inclined with respect to the longitudinal axis (X) at an angle ($\alpha_i$) other than 90°, the damping device comprising, for each first cylinder (22), a respective complementary cylinder connected to the base and inclined with respect to the longitudinal axis (X) at an angle ($\alpha'_i$) other than 90°, the first cylinder and the complementary cylinder being arranged on either side of said plane orthogonal to the longitudinal axis (X) and containing the centre (C) of the base (18).

**3.** Damping device according to claim 1 or 2, wherein the first cylinder and the complementary cylinder are not arranged symmetrically with respect to one another relative to said plane (P).

**4.** Damping device according to claim 3, wherein the first cylinder and the complementary cylinder are configured to develop respective forces along the longitudinal axis (X) which substantially balance one another.

**5.** Damping device according to claim 1 or 2, wherein the first cylinder and the complementary cylinder are arranged substantially symmetrically with respect to one another relative to said plane (P).

**6.** Damping device according to any one of the preceding claims, wherein the angle ($\alpha_i$) with respect to the longitudinal axis is an acute angle defined jointly by the corresponding cylinder (22) and the longitudinal axis (X), said angle ($\alpha_i$) being less than 80°.

**7.** Damping device according to claim 6, wherein said angle ($\alpha_i$) is less than 45°, and preferably less than 30°.

**8.** Damping device according to any one of the preceding claims, wherein the tube case (20) is rigid.

**9.** Damping device according to any one of the preceding claims, wherein the tube case (20) has a general cylindrical shape.

**10.** Damping device according to any one of the preceding claims, wherein at least one cylinder is connected to the tube case (20) by a ball-joint link.

**11.** Damping device according to any one of the preceding claims, wherein at least one cylinder is connected to the base (18) by a ball-joint link.

**12.** Damping device according to any one of the preceding claims, wherein the first cylinder and the complementary cylinder extend substantially in a radial plane with respect to the longitudinal axis (X).

**13.** Damping device according to claim 2, comprising a plurality of pairs of cylinders (22) each including a first cylinder and the associated complementary cylinder, the pairs of cylinders being connected to the base (22) at regularly spaced locations around the longitudinal axis (X).

**14.** Damping device according to any one of the preceding claims, wherein the base (18) comprises a collar (26) intended to receive and compress the cable (8), the collar (26) internally delimiting said through-orifice (24).

**15.** Structure, comprising a cable (8) and a damping device (16) according to any one of the preceding claims, the cable being received in the through-orifice (24) of the base (18) of the damping device (16).

**16.** Structure according to claim 15, wherein the structure (2) is a bridge.

FIG. 1

**FIG. 2**

**FIG. 3**

**FIG. 4**

**FIG. 5**

**FIG. 6**

**EP 3 430 206 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3421167 A
- FR 2859260 A1
- JP H0658370 A